# EUROPÄISCHE PATENTSCHRIFT

(11) **EP 1 948 476 B1**
(45) Veröffentlichungstag und Bekanntmachung des Hinweises auf die Patenterteilung: **26.10.2011**
(21) Anmeldenummer: 06829009.7
(22) Anmeldetag: 11.11.2006
(51) Int. Cl.: B60N 3/08, B60N 3/10, E05C 19/02, B60R 7/00

(54) **VERRIEGELUNGSMECHANIK UND ANORDNUNG MIT EINER VERRIEGELUNGSMECHANIK**
LOCKING MECHANISM AND ARRANGEMENT WITH A LOCKING MECHANISM
MECANISME DE VERROUILLAGE ET SYSTEME COMPRENANT UN MECANISME DE VERROUILLAGE

(30) Priorität: 18.11.2005 DE 102005018020; 05.10.2006 DE 202006015245 U
(43) Veröffentlichungstag der Anmeldung: 30.07.2008
(73) Patentinhaber: fischer automotive systems GmbH & Co. KG, 72160 Horb (DE)
(72) Erfinder: HARTER, Stefan, 79688 Hausen (DE); KAUPP, Gundolf, 72160 Horb-Altheim (DE); KÖPFF, Ralf, 72280 Dornstetten (DE); STERN, Armin, 78727 Oberndorf (DE); KILLGUSS, Werner, 75389 Neuweiler (DE)
(86) Internationale Anmeldenummer: PCT/EP2006/010834
(87) Internationale Veröffentlichungsnummer: WO 2007/057131

(56) Entgegenhaltungen:
- EP-A2- 0 845 386
- DE-C- 911 925
- US-A- 5 818 691

## Beschreibung

Die Erfindung betrifft eine Verriegelungsmechanik mit den Merkmalen des Oberbegriffs des Anspruchs 1 sowie eine Anordnung mit einer derartigen Verriegelungsmechanik mit den Merkmalen des Anspruchs 3.

Derartige Verriegelungsmechaniken sind bekannt und werden zur Verriegelung, also zum Geschlossenhalten von Deckeln von Fächern, beispielsweise dem Deckel eines Handschuhfachs, von Aschenbechern, Auszügen oder Schiebern von beispielsweise Getränkehaltern (Cupholder) in Fahrzeugen verwendet. Die Verriegelungsmechanik kann auch zum Halten in einer Offenstellung verwendet werden. Derartige Verriegelungsmechaniken werden auch als Push-Push-Mechaniken oder Herzkurvensteuerungen bezeichnet. Sie verriegeln selbsttätig beim Schließen des Fachs oder dgl. und werden durch Überdrücken entriegelt. Überdrücken bedeutet eine kurze erneute Bewegung in der Schließrichtung ausgehend von der verriegelten Stellung. Die Schließrichtung wird hier verallgemeinernd als Verriegelungsrichtung bezeichnet. Die Bezeichnung als Herzkurvensteuerung kommt von einer Kulissenbahn der Verriegelungsmechanik, deren Form oftmals an ein Herz erinnert.

Die EP 0 845 386 A2 stellt eine Verriegelungsmechanik nach dem Oberbegriff des Anspruchs 1 dar. Eine weitere Verriegelungsmechanik ist bekannt aus dem Patent DE 911 925. Die bekannte Verriegelungsmechanik weist einen Draht als Riegel auf, der an beiden Enden rechtwinklig abgewinkelt ist. Die Abwinklung an einem Ende des Drahts ist schwenkbar gelagert, so dass der Draht seitlich bewegbar ist. Das andere abgewinkelte Ende wirkt mit einer Kulissenbahn der Verriegelungsmechanik zusammen. Bei einer Relativbewegung der Kulissenbahn und des Riegels in einer Verriegelungsrichtung nähern der Riegel und die Kulissenbahn einander bis das andere abgewinkelte Ende des den Riegel bildenden Drahts in die Kulissenbahn gelangt. Die Kulissenbahn lenkt den Draht zur Seite und wieder zurück so aus, dass er ein Widerlager umfährt und in Hintergriff an dem Widerlager gelangt. Das Widerlager hält den Draht gegen eine Relativbewegung entgegen der Verriegelungsrichtung. Die Verriegelungsmechanik ist verriegelt. Beispielsweise ein Deckel eines Handschuhfachs oder ein Schieber eines Getränkehalters wird geschlossen gehalten. Denkbar ist auch wie gesagt ein Halten in einer offenen oder ausgefahrenen Stellung.

Bei einer erneuten, kurzen Relativbewegung wieder in der Verriegelungsrichtung, dem sog. Überdrücken, bewegt die Kulissenbahn den Draht seitlich so, dass er vom Widerlager freikommt. Beispielsweise der Deckel oder Schieber kann geöffnet oder ausgefahren werden, wobei das Öffnen oder Ausfahren vielfach federbetätigt erfolgt. Bei der bekannten Verriegelungsmechanik wird wie an sich üblich der den Riegel bildende Draht beim Verriegeln zu einer Seite und beim Entriegeln zur entgegengesetzten Seite ausgelenkt, d.h. der Draht umfährt das Widerlager beim Ver- und beim Entriegeln auf verschiedenen Seiten.

Der den Riegel bildende Draht der bekannten Verriegelungsmechanik ist in einer Ebene mit der Kulissenbahn oder in einer dazu parallelen Ebene angeordnet, er erstreckt sich also in der Verriegelungsrichtung. Ein Nachteil ist eine geringe Genauigkeit der Verriegelungsmechanik. Spiel in der Schwenklagerung des den Riegel bildenden Drahts, Toleranzen bei der Abwinklung der beiden Enden des Drahts und Spiel in der Kulissenbahn führen zu einer entsprechend großen Toleranz der verriegelten Stellung mit der Folge, dass beispielsweise der Deckel eines Handschuhfachs nicht bündig mit einem Armaturenbrett abschließt, sondern sichtbar vertieft oder erhaben im Armaturenbrett einliegt. Das gilt entsprechend für einen Schieber eines Getränkehalters oder dgl. Eine Verkleinerung der Toleranzen zur exakteren Positionierung der Kulissenbahn und des den Riegel bildenden Drahts der Verriegelungsmechanik in der verriegelten Stellung ist zwar möglich, jedoch aufwendig. Dabei ist auch eine dauerhafte Verkleinerung der Toleranz der Schwenklagerung des Drahts zu bedenken, die Schwenklagerung darf nicht durch Benutzung ausschlagen und Spiel bekommen.

Der Erfindung liegt die Aufgabe zugrunde, eine Verriegelungsmechanik der vorstehend erläuterten Art vorzuschlagen, die in einfacher Weise eine höhere Lagegenauigkeit des Drahts und der Kulissenbahn in der verriegelten Stellung ermöglicht.

Diese Aufgabe wird erfindungsgemäß durch die Merkmale der Ansprüche 1 und 3 gelöst. Bei der erfindungsgemäßen Verriegelungsmechanik sind der Draht und die Kulissenbahn nicht parallel, sondern senkrecht zueinander angeordnet. Beim Ver- und Entriegeln lenkt die Kulissenbahn den Draht seitlich aus, und zwar um eine zur Kulissenbahn parallele Achse. Senkrecht ist nicht im Sinne von exakt 90° zu verstehen, Toleranzen von etwa 10 - 20° sind denkbar. Das gilt sinngemäß auch für die Parallelität, die gedachte Achse, um die der Draht ausgelenkt wird, muss nicht exakt parallel zur Kulissenbahn sein.

Die Erfindung hat den Vorteil, dass weder eine Toleranz und Spiel einer Schwenklagerung des den Riegel bildenden Drahts noch eine Toleranz seiner Abwinklung die Lagegenauigkeit des Drahts und der Kulissenbahn der Verriegelungsmechanik in der verriegelten Stellung beeinträchtigen. Durch den zur Kulissenbahn senkrechten Draht ist das mit der Kulissenbahn zusammenwirkende Ende des Drahts nicht abgewinkelt. Eine Durchmessertoleranz von Draht ist sehr klein und das Widerlager, das der Draht in der verriegelten Stellung hintergreift, lässt sich mit kleiner Lagetoleranz anordnen, so dass mit vorgegebenen Herstellungs- und Montagetoleranzen eine hohe Lagegenauigkeit des Drahts und der Kulissenbahn in der Verriegelungsstellung möglich sind. Ein weiterer Vorteil können Platzgründe sein. Es ist nicht immer möglich, den Draht parallel zur Kulissenbahn anzuordnen.

Zu einer einfachen Schwenklagerung des den Riegel bildenden Drahts sieht die Erfindung eine Abwinklung des Drahts insbesondere an dessen der Kulissenbahn fernem Ende vor.

Eine Ausgestaltung der Erfindung sieht eine Querführung für den Draht vor, die den Draht gegen eine Bewegung in Verriegelungsrichtung abstützt. Die Querführung, die beispielsweise ein gerader Schlitz sein kann, ist ortsfest bezüglich des Drahts und zusammen mit dem Draht relativ zur Kulissenbahn beweglich. Die Querführung verläuft in der Richtung, in die der Draht beim Ver- und beim Entriegeln ausgelenkt wird. Die Abstützung des Drahts gegen eine Bewegung in der Verriegelungsrichtung und der dazu entgegengesetzten Richtung erhöht eine mechanische Stabilität und verbessert die Lagegenauigkeit der Verriegelungsmechanik in der verriegelten Stellung.

Die im unabhängigen Anspruch 3 angegebene Anordnung ist durch vorstehende Erläuterung der erfindungsgemäßen Verriegelungsmechanik bereits erläutert worden. Eines der beiden Teile der Anordnung ist beispielsweise der Deckel eines Fachs oder Handschuhfachs, ein Schieber, ein Auszug oder dgl. Das andere Teil ist beispielsweise das Fach oder Handschuhfach, ein Gehäuse, in dem der Auszug oder Schieber schubladenartig verschiebbar geführt ist oder eine den Deckel, den Schieber, den Auszug oder Aschenbecher umschließende Öffnung. Es können die Kulissenbahn oder der den Riegel bildende Draht am beweglichen Teil angeordnet sein. Die Relativbewegungsrichtung der beiden Teile der Anordnung zueinander ist so, dass die Kulissenbahn in ihrer Ebene und senkrecht zum Draht in der Verriegelungsrichtung und in entgegengesetzter Richtung bewegt wird.

Die Erfindung wird nachfolgend anhand eines Ausführungsbeispiels näher erläutert. Es zeigen:
- Figur 1: einen Einbauaschenbecher für einen Kraftwagen mit einer erfindungsgemäßen Verriegelungsmechanik; und
- Figur 2: eine Ansicht einer Kulissenbahn der Verriegelungsmechanik mit Blickrichtung gemäß Pfeil II in Figur 1.

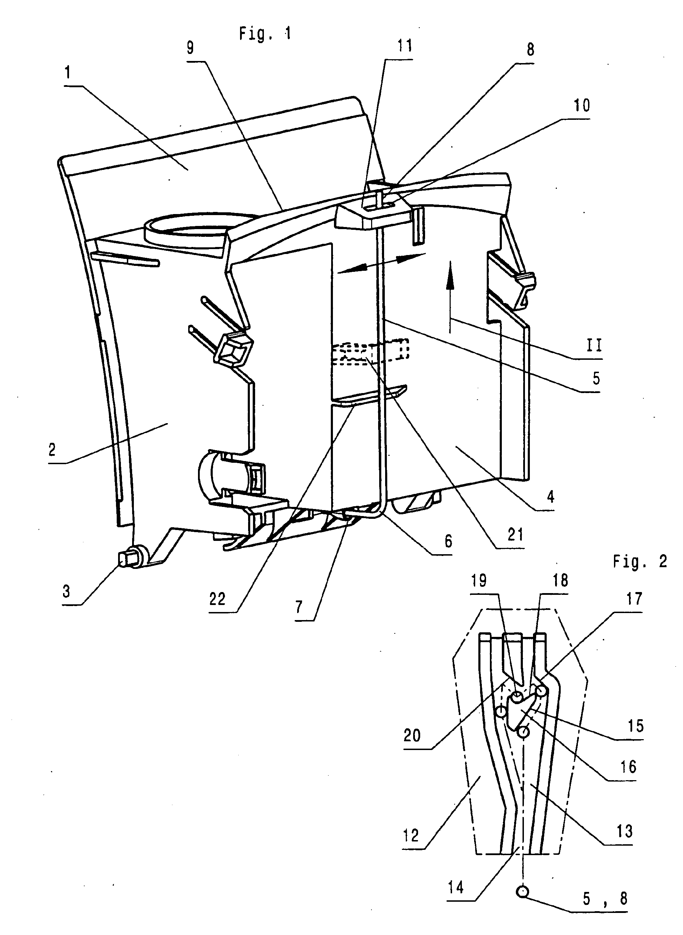

Der in Figur 1 dargestellte Einbauaschenbecher 1 ist als schachtelförmiges, in einer vorgesehenen Einbaulage oben offenes Behältnis ausgebildet. Er ist zum Einbau in eine rechteckige Öffnung in einer senkrechten oder schrägen Fläche eines nicht dargestellten Kraftwagens vorgesehen. In einem unteren Bereich seiner Seitenwände 2 stehen Lagerzapfen 3 zur Schwenklagerung um eine horizontale Schwenkachse seitlich vom Einbauaschenbecher 1 ab. Einbauaschenbecher für Kraftwagen, deren Schwenklagerung und Einbau sind an sich bekannt und brauchen deswegen an dieser Stelle nicht erläutert werden. An einer Rückwand 4 weist der Einbauaschenbecher 1 einen Draht 5 auf, der einen Riegel der erfindungsgemäßen Verriegelungsmechanik bildet. Mit Rückwand 4 ist diejenige Wand des Einbauaschenbechers 1 bezeichnet, die bei eingebautem Einbauaschenbecher 1 einem Fahrgastraum abgewandt ist. Der Draht 5 erstreckt sich gerade und parallel zur Rückwand 4. Ein Ende des Drahts 5 ist rechtwinklig abgewinkelt (Abwinklung 6) und in einem Lager 7 an einer Unterseite des Einbauaschenbechers 1 schwenkbar gelagert, so dass der Draht 5 in seitlicher Richtung beweglich ist. Der Draht 5 verläuft in der vorgesehenen Einbaulage des Einbauaschenbechers 1 vertikal nach oben, sein anderes Ende 8 steht nach oben über einen Rand 9 des Einbauaschenbechers 1 vor. Am oberen Rand 9 der Rückwand 4 des Einbauaschenbechers 1 durchgreift der den Riegel bildende Draht 5 ein Langloch 10 in einer Rippe 11 des Einbauaschenbechers 1. Das Langloch 10 verläuft parallel zur Rückwand 4 und zu deren oberem Rand 9. Es bildet eine Querführung 10 für den Draht 5 und wird nachfolgend als solche bezeichnet werden. Die Querführung 10 stützt den Draht 5 nahe seines nach oben überstehenden anderen Endes 8 senkrecht zu einer Bewegungsrichtung des Einbauaschenbechers 1 ab. Die Bewegungsrichtung des Einbauaschenbechers 1 ist durch die Schwenklagerung mit den Lagerzapfen 3 bestimmt, die Bewegungsrichtung ist eine gedachte Kreisbogenbahn um die durch die Lagerzapfen 3 definierte Schwenkachse des Einbauaschenbechers 1.

Über dem Einbauaschenbecher 1 weist eine nicht dargestellte Einbauöffnung oder ein nicht dargestelltes Einbaugehäuse des Einbauaschenbechers 1 eine feststehende Wandung oder dgl. auf, die nachfolgend als Abdeckung 12 bezeichnet werden soll (Figur 2). Ist der Einbauaschenbecher 1 in die Einbauöffnung hineingeschwenkt, d. h. geschlossen, befindet er sich unter der Abdeckung 12, die die offene Oberseite des Einbauaschenbechers 1 verschließt. Ist der Einbauaschenbecher 1 aus seiner Einbauöffnung herausgeschwenkt, also offen, ist seine offene Oberseite zugänglich. In der Abdeckung 12 weist die erfindungsgemäße Verriegelungsmechanik die in Figur 2 dargestellte Kulissenbahn 13 auf, die mit dem den Riegel bildenden Draht 5 an der Rückwand 4 des Einbauaschenbechers 1 zusammenwirkt. Die Kulissenbahn 13 ist senkrecht zum Draht 5 angeordnet, d. h. die Kulissenbahn 13 ist in einer gedachten Tangentialebene oder einer gedachten Zylinderfläche zur Schwenkachse des Einbauaschenbechers 1 angeordnet, die durch dessen Lagerzapfen 3 definiert ist. Wird der Einbauaschenbecher 1 geschlossen, gelangt das oben überstehende andere Ende 8 des den Riegel der Verriegelungsmechanik bildenden Drahts 5 in eine Mündung 14 der Kulissenbahn 13. Die Mündung 14 erweitert sich trichterförmig um das Ende 8 des Drahts 5 zu "fangen". Das Schließen des Einbauaschenbechers 1 wird nachfolgend als Bewegung in einer Verriegelungsrichtung der Verriegelungsmechanik bezeichnet werden. Die Bewegung ist eine Relativbewegung des Einbauaschenbechers 1 und des Drahts 5 in Bezug auf die Abdeckung 12 und die Kulissenbahn 13. Bei weiterer Bewegung in der Verriegelungsrichtung stößt das Ende 8 des Drahts 5 gegen eine Schrägfläche 15 eines Mittelstücks 16 der Kulissenbahn 13 und wird von der Schrägfläche 15 seitlich ausgelenkt. Das Ende 8 des Drahts 5 bewegt sich seitlich am Mittelstück 16 vorbei und wird durch eine Schräge 17 der Kulissenbahn 13 wieder seitlich zurück in Hintergriff auf einer Rückseite des Mittelstücks 16 der Kulissenbahn 13 bewegt. Die Rückseite des Mittelteils 16 ist konkav, sie bildet eine Innenecke und wird nachfolgend als Widerlager 18 der Kulissenbahn 13 der erfindungsgemäßen Verriegelungsmechanik bezeichnet werden. Durch den Hintergriff am Widerlager 18 verriegelt der Draht 5 den Einbauaschenbecher 1 in seiner geschlossenen Stellung. Die Verriegelungsstellung ist in Figur 2 mit der Bezugszahl 19 bezeichnet.

Die Auslenkung des Drahts 5, d.h. seine Bewegung zur Seite, ist eine Bewegung um eine gedachte Achse, die parallel oder zumindest in etwa parallel zur Kulissenbahn 13 verläuft. Die gedachte Achse ist eine Schwenkachse des Drahts 5, die durch ein Lager 7 definiert ist.

Zum Entriegeln wird der Einbauaschenbecher 1 überdrückt, d. h. er wird erneut ein kurzes Stück in der Schließ- und Verriegelungsrichtung bewegt. Dadurch gelangt das Ende 8 des Drahts 5 gegen eine Schräge 20 der Kulissenbahn 13, die den Draht 5 wiederum seitlich auslenkt in entgegengesetzter Richtung wie bei der Verriegelung. Wird der Einbauaschenbecher 1 geöffnet, d. h. aus seiner Einbauöffnung herausgeschwenkt, gelangt das Ende 8 des Drahts 5 seitlich am Mittelstück 16 der Kulissenbahn 13 vorbei und kommt frei vom Widerlager 18 der Kulissenbahn 13. Die mit einer Strichpunktlinie dargestellte Bahn des Endes 8 des den Riegel 5 der Verriegelungsmechanik bildenden Drahts 5 ist durch die Form der Kulissenbahn 13 zwangsläufig.

Das die Querführung 10 bildende Langloch an der Rückwand 4 des Einbauaschenbechers 1 stützt den Draht 5 nah seines anderen, beim Verriegeln in die Kulissenbahn 13 gelangenden Endes 8. Der Einbauaschenbecher 1 ist in seiner geschlossenen, verriegelten Stellung dadurch stabil gehalten.

Der Einbauaschenbecher 1 und die Abdeckung 12 bilden zwei Teile einer Anordnung mit der Verriegelungsmechanik gemäß der Erfindung. Die beiden Teile 1, 12 sind in der Schließ- und Verriegelungsrichtung und in entgegengesetzter Richtung gegeneinander beweglich durch die Schwenkbarkeit des Einbauaschenbechers 1. Grundsätzlich kann die Kulissenbahn 13 auch am beweglichen Teil, im Ausführungsbeispiel also am Einbauaschenbecher 1, und der den Riegel der Verriegelungsmechanik bildende Draht 5 am feststehenden Teil, im Ausführungsbeispiel also an der Abdeckung 12 angeordnet sein (nicht dargestellt). Anstelle eines Einbauaschenbechers 1 lässt sich beispielsweise auch der Deckel eines Handschuhfachs oder ein sonstiger Deckel, ein Schieber oder ein Auszug beispielsweise eines Getränkehalters (Cupholders) mit der erfindungsgemäßen Verriegelungsmechanik in der geschlossenen oder in einer offenen Stellung verriegeln (nicht dargestellt). Vorzugsweise erfolgt das Öffnen oder allgemeiner ausgedrückt die Bewegung entgegen der Verriegelungsrichtung nach Entriegelung federbetätigt durch die Kraft eines (Öffnung-)Federelements.

Ein Bügel 21 übergreift den Draht 5 und drückt ihn auf eine Rippe 22 auf der Rückwand 4 des Einbauaschenbechers 1, so dass der Draht 5 durch Reibung gebremst ist. Der Draht 5 bewegt sich deswegen nicht von selbst, sondern nur durch die Einwirkung der Kulissenbahn 13.

## Patentansprüche

1. Verriegelungsmechanik, mit einem Draht (5) als Riegel und mit einer Kulissenbahn (13), die bei einer Relativbewegung in einer Verriegelungsrichtung den Draht (5) so bewegt, dass er in Hintergriff an einem Widerlager (18) gelangt, das den Draht (5) gegen eine Relativbewegung entgegen der Verriegelungsrichtung hält, und die den Draht (5) bei einer erneuten Relativbewegung in der Verrieqelurigsrichtung so bewegt, dass er vom Widerlager (18) freikommt, wobei der Draht (5) mit Toleranzen von etwa 10°-20° senkrecht zur Kulissenbahn (13) angeordnet ist, **dadurch gekennzeichnet, dass** der Draht (5) eine Abwinklung (6) aufweist, an der er schwenkbar um eine zur Kulissenbahn (13) mit Toleranzen von etwa 10°-20° parallele Achse in einem Lager (7) gelagert ist, und dass der Draht (5) bei der Relativbewegung von der Kulissenbahn (13) um die Achse ausgelenkt wird.

2. Verriegelungsmechanik nach Anspruch 1, **dadurch gekennzeichnet, dass** der Draht (5) eine Querführung (10) aufweist, die ihn gegen eine Bewegung in der Verriegelungsrichtung abstützt.

3. Anordnung mit einer Verriegelungsmechanik nach den Ansprüchen 1 oder 2, mit zwei Teilen (1, 12), die in einer Verriegelungsrichtung und in entgegengesetzter Richtung relativ zueinander beweglich sind, wobei eines der beiden Teile (1) den Draht (5) als Riegel und das andere Teil (12) die Kulissenbahn (13) aufweist.

## Claims

1. Latching mechanism having a wire (5) as latching member and having a guide track (13) which, on relative movement in a latching direction, so moves the wire (5) that it comes into engagement behind an abutment (18) that holds the wire (5) against relative movement in the direction opposite to the latching direction and which, on renewed relative movement in the latching direction, so moves the wire (5) that it comes free from the abutment (18), the wire (5) being arranged perpendicular - with tolerances of about 10°-20° - to the guide track (13), **characterised in that** the wire (5) has a bent-away portion (6) by which the wire is so mounted in a mounting (7) as to be pivotable about an axis parallel - with tolerances of about 10°-20° - to the guide track (13), and **in that** the wire (5) is, in the case of the relative movement, deflected about the axis by the guide track (13).

2. Latching mechanism according to claim 1, **characterised in that** the wire (5) has a transverse guideway (10) which provides it with support against movement in the latching direction.

3. Arrangement having a latching mechanism according to claim 1 or 2, having two parts (1, 12) which are movable relative to one another in a latching direction and in the opposite direction, one (1) of the two parts having the wire (5) as latching member and the other part (12) having the guide track (13).

## Revendications

1. Mécanisme de verrouillage, avec un fil métallique (5) comme élément de verrouillage et avec une coulisse (13) qui, lors d'un mouvement relatif dans une direction de verrouillage, déplace le fil métallique (5) de telle sorte qu'il parvient en prise arrière sur un élément de contre-appui (18), qui bloque le fil métallique (5) pour empêcher un mouvement relatif à l'encontre de la direction de verrouillage et qui, lors d'un nouveau mouvement relatif dans la direction de verrouillage, déplace le fil métallique (5) de telle sorte qu'il se libère de l'élément de contre-appui (18), sachant que le fil métallique (5) est disposé perpendiculairement à la coulisse (13) avec des tolérances d'environ 10° à 20°, **caractérisé en ce que** le fil métallique (5) présente un coude (6) au niveau duquel il est monté dans un palier (7) à pivotement autour d'un axe parallèle avec des tolérances d'environ 10° à 20° à la coulisse (13), et **en ce que** le fil métallique (5) est, lors du mouvement relatif, dévié autour de l'axe par la coulisse (13).

2. Mécanisme de verrouillage selon la revendication 1, **caractérisé en ce que** le fil métallique (5) présente un guide transversal (10) qui le soutient à l'encontre d'un mouvement dans la direction de verrouillage.

3. Système comprenant un mécanisme de verrouillage selon la revendication 1 ou 2, avec deux pièces (1, 12) qui sont mobiles l'une par rapport à l'autre dans une direction de verrouillage et dans la direction opposée, sachant qu'une (1) des deux pièces présente le fil métallique (5) comme élément de verrouillage et que l'autre pièce (12) présente la coulisse (13).
